# EUROPEAN PATENT SPECIFICATION

(11) **EP 2 896 145 B1**
(45) Date of publication and mention of the grant of the patent: **27.07.2016**
(21) Application number: 13763215.4
(22) Date of filing: 12.09.2013
(51) Int. Cl.: H04B 10/61, G01J 11/00

(54) **VISUALIZATION OF AN OPTICAL SIGNAL THROUGH LINEAR OPTICAL SAMPLING**
VISUALISIERUNG EINES OPTISCHEN SIGNALS DURCH LINEARE OPTISCHE ABTASTUNG
VISUALISATION D'UN SIGNAL OPTIQUE PAR ÉCHANTILLONNAGE OPTIQUE LINÉAIRE

(30) Priority: 14.09.2012 EP 12306107
(43) Date of publication of application: 22.07.2015
(73) Proprietor: Alcatel Lucent, 92100 Boulogne-Billancourt (FR)
(72) Inventor: PROVOST, Jean-Guy, F-91460 Marcoussis (FR); SHEN, Alexandre, F-91767 Palaiseau (FR)
(74) Representative: Berthier, Karine
(86) International application number: PCT/EP2013/068912
(87) International publication number: WO 2014/041073

(56) References cited:
- US-A1- 2005 185 255

## Description

### TECHNICAL FIELD

The present invention pertains to the field of telecommunications over optical networks, and more specifically the matter of direct visualization and control of very high-speed optical signals, typically up to several hundred gigabytes/second, through linear optical sampling.

### BACKGROUND

Methods of digitization through linear optical sampling are derived from a particular application of heterodyne detection. Heterodyne detection generally uses an optical signal derived from a local oscillator, which is mixed through an optical coupler to the optical signal to be analyzed. The mixed optical signal is then detected on a photodetector, whose electrical signal is a beat signal between the optical signal to be analyzed and the signal derived from the local oscillator. When balanced photodetectors are used, they deliver a heterodyne electrical signal coming from the mixture of the optical signal and the signal derived from the oscillator, along a first arm coming from the coupler on one end and from a copy of the mixed signal but phase-shifted by one quadrature (π/2) on the other end. Comparing these two electrical signals makes it possible to deduce the amplitude and phase of the encoded signal to be analyzed. It is essential for the two photodetectors to be balanced, or matched, so that comparing the two electrical signals gives the amplitude and phase of the analyzed optical signal without any systematic error.

However, the simple heterodyne detection scheme does not make it possible to easily extract the phase from the encoded optical signal to be analyzed: This extraction requires accurately knowing the amplitude of the optical signal and/or local oscillator. In practice, it is often helpful to double the basic heterodyne detection scheme, and to introduce a quarter-wave plate (phase-shifted by π/2) on either the optical path of the signal, or that of the local oscillator. This gives the basic detection scheme that is called coherent, in which two pairs of balanced photodetectors are used. Subtracting the first two photo-signals gives an electrical signal denoted **I,** and that of the second pair of balanced photodetectors gives an electrical signal denoted Q. The electrical signals I and Q where I = |C| cos (ϕ) and Q = |C| sin (ϕ) may be used to reconstruct a complex number C, where C = |C| (cos ϕ + j sin ϕ) representative of the optical signal to be analyzed.

When ultra-short optical pulses are used as a local oscillator, the basic technique may be called "heterodyne linear optical sampling". Heterodyne detection can only take place when the optical signal and the pulse (local oscillator) are present at the photodetector. For this reason, in the basic scheme of linear optical sampling, the following components are essential, but not sufficient in real-world cases: a source of short optical pulses (local oscillator), an optical system enabling the mixing of the optical signal to be analyzed and the signal from the local oscillator comprising optical waveguide, such as optical fibers, and a delay line that makes it possible to introduce a π/2 phase-shift between the first heterodyne detection system and the second, and finally two pairs of balanced photodetectors.

Compared to nonlinear methods, linear methods allow the processing of optical signals that have a low power at the input and preserve phase-related information thanks to double detection. However, digitization methods using linear optical sampling require too much coherence time with regard to the light signals involved in sampling (on the order of 50 µs), which is incompatible with real-world optical signals, and consequently this method may lead to a loss of information.

One way to minimize this drawback is to make use of double sampling. However, it is necessary in such a case to double the equipment used, and therefore the cost. Typically, the sampling pulse is doubled and shifted by one bit-time of the optical signal to be analyzed. At the same time, a sample is taken from an information bit and another from the following bit, so that the samples that are taken retain their temporal coherence: This is because, even if the coherence time of the signals involved is relatively short (≤ 1 µs), it is still much longer than the period of the analyzed signals. As a reminder, a 10 Gb/s signal has a period of 100 ps. Thus, the problem of the coherence time of the signals may be solved in this way, though at the cost of duplicating the coherent detection scheme. At this stage, the linear sampling scheme is a combination of four basic heterodyne detection schemes, and therefore requires the presence of eight balanced photodetectors.

The document US-2005/0185255 describes a linear optical sampling apparatus.

The signal from the local oscillator, which is assumed to be known, must have an optical polarization aligned with that of the optical signal to be analyzed at the time they arrive at the photodetector so that the heterodyne detection can take place. One of the solutions that makes it possible to solve the problem of the unknown polarization of the optical signal to be analyzed consists of projecting that optical signal onto two well-known orthogonal polarization states, chosen arbitrarily or by convention, and of maintaining those two known states through the use of polarization-maintaining optical fibers in an optical fiber system. These two polarization states must be processed and detected identically before the signals from heterodyne detection are reconstructed, in order to reconstruct the initial optical signal before it is projected onto the two orthogonal states. Thus, the solution requires the duplication of any coherent pulse detection scheme (double heterodyne detection). In combination with the solution proposed for solving the problem of weak temporal coherence in real-world optical signals, a full heterodyne detection system therefore requires replicating the basic heterodyne detection scheme eightfold, leading to the use of sixteen balanced photodetectors.

### SUMMARY

The drawbacks of the prior art are eliminated through a system for visualizing an optical signal through linear optical sampling that is simpler and less expensive than known systems.

For this purpose, a visualization system using ultra-fast linear optical sampling is proposed, which makes it possible to characterize amplitude- and/or phase-modulated optical signals at a transmission rate that may reach very high speeds and with no limitations regarding the length of the sequences, with the rate being limited only by the duration of the sampling pulse that is used.

The system is implemented by a method for visualizing a very high-speed complex (i.e. amplitude and/or phase-modulated) optical signal through linear optical sampling, with an advanced encoding format, particularly format using phase encoding, which preserves information related to the optical signal to be analyzed at a lower cost.

The proposed method makes it possible to obtain the heterodyne signal based on the actual situation in which the optical signal to be analyzed has an unknown optical propagation mode and low temporal coherence.

The subject matter of the present invention is a system for visualizing an optical signal OS through ultra-fast linear optical sampling, comprising at least one first subsystem relating to the processing of a pulse sampling signal SP comprising a vertical polarization component Vsp and a horizontal polarization component Hsp and at least one second subsystem related to the processing of an optical signal OS to be sampled comprising a vertical polarization component Vtm, Vte and a horizontal polarization component Htm, Hte, the first and second subsystems cooperating with a device for sampling and detecting the optical signal.

The pulse signal SP and the optical signal OS enter the device for sampling and detecting the optical signal, each respectively in the form of a signal that comprises a vertical polarization component Vsp, Vtm, Vte and a horizontal polarization component Hsp, Htm, Hte that are orthogonal to one another. The vertical polarization component Vsp, Vtm, Vte and the horizontal polarization component Hsp, Htm, Hte our time-shifted with respect to one another, respectively for the pulse signal SP and for the optical signal OS.

According to a first aspect, the first subsystem comprises a source SPS generating a pulse optical signal SP, at least one duplicator SPD-PX-TS that divides the pulse signal SP into two replicas, introducing polarization crossing and a time-shift between the two replicas, and combine those two replicas into a single outgoing pulse signal SP, and at least one splitter PM-TSM-S that divides the pulse signal exiting the duplicator SPD-PX-TS into two replicas, and accurately adjusts the time-shift between the two replicas, for vertical Vsp and horizontal polarization components of the pulse signal SP independently.

According to one embodiment, the time-shift introduced between the two replicas by the duplicator SPD-PX-TS is equal to the sum (Tp/2 + Td) of half the period Tp of the pulse signal SP and bit-time Td of the optical signal OS.

According to another embodiment, the splitter PM-TSM-S comprises at least one cylinder of piezoelectric material around which is wound a polarization-maintaining optical fiber whose length varies based on the voltage applied to the cylinder. This way, the splitter PM-TSM-S enables an accurate adjustment of the time-shift between the two replicas, for the vertical Vsp and horizontal Hsp polarization components of the pulse signal SP independently.

According to yet another embodiment, the two replicas of the pulse signal SP respectively derived from the two outputs of the splitter PM-TSM-S are phase-shifted by one quadrature (π/2).

According to a second aspect, the second subsystem comprises a separator PBS, which receives an optical signal OS to be visualized and separates the incoming optical signal OS into two linear propagation modes E1 and E2 that are orthogonal to one another, and at least one duplicator DD-PX-TS that divides the optical signal OS into two replicas, introduces polarization crossing and a time-shift between the two replicas, and combines those two replicas into a single optical signal OS.

According to one embodiment, the fixed time-shift TS introduced between the two replicas by the duplicator DD-PX-TS is equal to half the period Tp of the pulse signal SP.

According to a third aspect, the device for sampling and detecting the optical signal OS comprises balanced photodetectors, fixed time delay lines FDL and a two-input analog-to-digital converter. The device for sampling and detecting the optical signal OS may also comprise comparators for comparing the electrical signals emitted by the balanced photodetectors.

According to one embodiment, the links are in the form of polarization-maintaining optical fibers.

According to another embodiment, the linear optical sampling visualization system further comprises polarization-maintaining couplers.

As seen above, a currently known complete linear heterodyne detection system therefore requires replicating the basic linear heterodyne detection scheme eightfold, which requires the presence of sixteen balanced photodetectors. The invention makes it possible to replicate the basic heterodyne detection scheme merely fourfold, i.e. a reduction by a factor of two compared to the known complete system. The benefit of this detection system is not duplicating the basic linear heterodyne detection scheme, while using double sampling with two short pulses separated by at least one bit-time. This double sampling is carried out by duplicating the sampling pulse, and by rotating their optical polarization by π/2, so that the duplicated double pulse is orthogonal to the pair of initial pulses. It is then necessary to copy the optical signal to be sampled and rotate its polarization by 90°, so that the linear heterodyne detection of the copy of the optical signal does take place within the balanced photodetectors. In order for the electrical signals corresponding to the two pairs of pulses to be easily told apart, it is additionally necessary to temporally separate those two pairs of pulses. In the embodiment described, this time separation is one half-period of the sampling signal.

A further subject matter of the invention is a method for visualizing a complex optical signal OS through linear optical sampling, implemented by means of this linear optical sampling system.

The method comprises the following steps:
- a pulse signal SP is emitted,
- the pulse signal SP is divided into two replicas by introducing polarization crossing and a time-shift between the two replicas,
- the two replicas are combined into a single resulting signal comprising a vertical polarization component Vsp and a horizontal polarization component Hsp orthogonal to one another and time-shifted,
- the resulting pulse signal SP is divided into two replicas, and the time-shift between them is set accurately,
- the two replicas of the pulse signal SP are introduced into the device for sampling and detecting the optical signal OS,

The method additionally comprises the following steps:
- the optical signal OS is separated into two propagation modes E1 and E2 that are orthogonal to one another,
- a propagation mode E1, E2 is divided into two replicas by introducing polarization crossing and a time-shift between the replicas,
- the two replicas are combined into a single resulting signal comprising a vertical polarization component Vtm, Vte and a horizontal polarization component Htm, Hte orthogonal to one another and time-shifted,
- the resulting pulse signal OS is divided into two replicas, and a fixed time-shift is introduced between them,
- the two replicas of the pulse signal OS are introduced into the device for sampling and detecting the optical signal OS.

According to one aspect, the time-shift introduced between the two replicas by the pulse optical signal SP is equal to the sum (Tp/2 + Td) of half the period Tp of the pulse signal SP and the bit-time Td of the optical signal OS.

According to another aspect, the accurate adjustment of the time-shift between the two replicas, for the vertical Vsp and horizontal Hsp polarization components of the pulse signal SP is independently achieved by varying the lengths of the polarization-maintained optical fiber, wound around a cylinder of piezoelectric material, under the effect of the voltage applied to the cylinder,

According to yet another aspect, the vertical polarization component Vsp of the pulse signal SP is parallel to the vertical polarization component Vtm, Vte of the optical signal OS, and the horizontal polarization component Hsp of the pulse signal SP is parallel to the horizontal polarization component Htm, Hte of the optical signal OS, making it possible to generate interferences. The signals are broken down into two orthogonal polarization components, called vertical and horizontal. The pulse signal SP is broken down into vertical Vsp and horizontal Hsp components, and the magnetic TM and electric TE transverse propagation modes of the optical signal OS respectively give the vertical Vtm and Vte components and horizontal Htm and Hte components. The vertical and horizontal components are time-shifted. The vertical components and horizontal components of the pulse signal SD and optical signal OS are parallel. The successive, synchronized detection of a vertical components and horizontal components makes it possible to sample the signal OS, which is visualized by electronic processing.

The linear optical sampling visualization system, and the associated method, have the benefit of avoiding the duplication of the devices needed to process a single component of a complex optical signal to obtain a visualization system capable of processing two components of such a signal. As a result, the proposed visualization system is simpler and less expensive than the existing systems. This linear optical sampling visualization system is particularly intended to be used to test photonic integrated circuits PIC.

### DESCRIPTION OF THE FIGURES

Other characteristics and advantages of the present invention will become apparent upon reading the following description of one embodiment, which is naturally given by way of a non-limiting example, and in the attached drawing, in which:
- Figure 1 depicts one embodiment of the entire system for visualizing a phase- and/or amplitude-encoded signal through linear optical sampling,
- Figure 2 schematically depicts, in a simplified fashion, part of a linear optical sampling visualization system of Figure 1,
- Figure 3 depicts in detail a duplicator PSD-PX-TS for the duplication of sampling pulses,
- Figure 4 depicts in detail a duplicator DD-PX-TS for the duplication of optical signal data,
- Figure 5 depicts in detail a splitter PM-TSM-S for the accurate adjustment of the time-shift,
- Figure 6 depicts in detail a device BD-AC-TS for the sampling and detection of the optical signal,
- Figure 7 depicts the full linear optical sampling visualization system.

### DETAILED DESCRIPTION

### Overview of the linear optical samplina visualization system

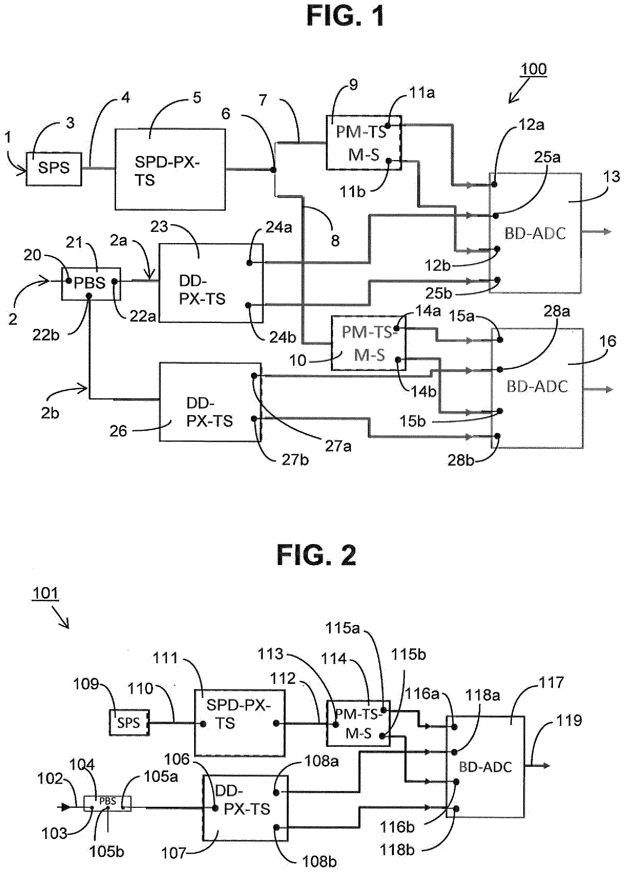

Figure 1 depicts one embodiment of the entire system for visualizing very high-speed complex (phase and/or amplitude-encoded) optical signals OS through linear optical sampling. In reality, the optical signal OS to be visualized propagates using an unknown mode. The optical signal OS entering the system is therefore projected onto two arbitrary linear propagation modes, which are orthogonal to one another, denoted mode E1 and mode E2. This orthogonality must be taken in its broadest sense, meaning its algebraic sense, and is not limited to the sense of perpendicularly. These propagation modes E1 and E2 may, for example, respectively correspond to the transverse magnetic mode TM and transverse electric mode TE of the vectorial optical signal OS guided within a polarization-maintaining fiber PMF.

For simplicity's sake, the linear optical sampling visualization system **100** depicted in Figure 1 is broken down into a first subsystem **1** related to the signal containing the sampling pulses and a subsystem **2** related to the optical signal to be analyzed containing the transmitted data.

### First subsystem related to the signal containing the sampling pulses

The first subsystem **1** related to the signal containing the sampling pulses comprises a laser source SPS **3** (for "Sampling Source Pulse") that emits a sampling pulse signal SP (for "Sampling Pulse"), carried by a polarization-maintaining optical fiber PMF **4** (for "Polarization-Maintaining Fiber"). The pulse signal SP is sent to a duplicator SPD-PX-TS **5** (for "Sampling Pulse Duplicator with Polarization Crossing and Time Shifting") that divides the pulse signal SP into two replicas, and simultaneously introduces polarization crossing PX and time-shifting TS between those two replicas. "Dividing" a signal means producing two identical replicas that each have half the power of the incoming signal. These two polarization-crossed and time-shifted replicas are then combined so as to produce an outgoing duplicated pulse signal SP. The outgoing duplicated pulse signal SP thereby comprises a so-called vertical polarization component Vsp and a so-called horizontal polarization component Hsp with a time-shift between those two polarization components. In the present situation, the vertical polarization component Vsp is shifted by a half-period plus one bit-time compared to the horizontal polarization component Hsp.

The vertical Vsp and horizontal Hsp polarization components represent vectors homogenous to an optical field (or electromagnetic field) derived from breaking down the optical field that constitutes the pulse signal SP. This breakdown is done on the basis of eigen vectors that are known, as they have been arbitrarily chosen by the user, for example transverse magnetic propagation mode TM or transverse electric propagation mode TE of a polarization-maintaining fiber PMF. The vertical Vsp and horizontal Hsp polarization components are, for example, orthogonal vectors, and if the pulse signal SP is the original vector, then the vectorial relationship is: SP = Vsp + Hsp.

The duplicator SPD-PX-TS **5** is followed by a coupler **6** that divides the duplicated signal into two replicas, each one propagating into one of the two arms **7** and **8** that respectively feed into the splitters PM-TSM-S **9** and **10** (for "Polarization Maintaining and Time-Shifting Maintaining Splitter"). In what follows, the term "coupler" refers to a device capable of serving both to couple optical signals and to divide optical signals depending on the direction in which it is placed with respect to the direction in which the optical signal travels.

Each of the PM-TSM-S splitters **9** and **10** divides the duplicated pulse signal SP while maintaining the polarization and time-shift that had previously been introduced. The splitter PM-TSM-S **9** divides the signal entering through the arm **7** into two replicas each comprising a vertical polarization component Vsp and a horizontal polarization component Hsp with a time-shift between those two components. The splitter PM-TSM-S **9** also accurately readjusts the time-shift on the path of one of the two resulting replicas with respect to the other replica. The two replicas are respectively collected at the outputs **11 a** and **11 b** of the splitter PM-TSM-S **9.** The two replicas, which each have the form of a single signal comprising vertical polarization components Vsp and Hsp, are then introduced into the inputs **12a** and **12b** respectively, of a device BD-ADC **13** (for "Balanced Detector and Analog to Digital Converter") for sampling and detecting the optical signal OS. Likewise, the splitter PM-TSM-S **10** divides the signal entering through the arm **8** into two replicas with an accurate readjustment of the time-shift between them. The two replicas are respectively received at the outputs **14a** and **14b** of the splitter PM-TSM-S **10.** These two replicas, which each have the form of a single signal comprising vertical Vsp and horizontal Hsp polarization components, are then introduced into the inputs **15a** and **15b** respectively, of a device BD-ADC **16** for sampling and detecting the data-carrying optical signal OS.

### Second subsystem related to the optical signal to be analyzed

The optical signal OS to be analyzed enters the subsystem **2** of the linear optical sampling visualization system **100** through the entry port **20** of a splitter PBS **21** (for "Polarization Beam Splitter") that makes it possible to separate the two propagation modes E1 and E2 from one another, for example, respectively, transverse magnetic mode TM and transverse electric mode TE. The transverse magnetic mode TM, which is collected at the output **22a** of the splitter PBS **21** and injected into the branch **2a** of the subsystem **2,** is separated from the transverse electric mode TE, which is collected at the output **22b** of the splitter PBS **21** and injected into the branch **2b** of the subsystem **2.**

The branch **2a** related to the transverse magnetic mode TM comprises a duplicator DD-PX-TS **23** (for "Data Duplicator with Polarization Crossing-Time Shifting"). The duplicator DD-PX-TS **23** divides the transverse magnetic mode TM into two replicas and introduces polarization crossing PX and a time-shift TS between the two replicas. The transverse magnetic mode TM is then divided into two replicas, each one comprising a so-called vertical polarization component Vtm and a so-called horizontal polarization component Htm. The two replicas are respectively collected at the outputs **24a** and **24b** of the duplicator DD-PX-S **23.** The two replicas of the transverse magnetic mode TM of the optical signal OS are then mixed with the pulse signal from the laser source SPS **3,** in accordance with the previously described heterodyning process. Next, once mixed, the two replicas are introduced into the inputs **25a** and **25b** respectively of the device BD-ADC **13** for sampling and detecting the optical signal OS in view of being displayed after electronic processing, for example in the form of a constellation diagram or an eye diagram in the event that the initial OS signal is only polarized in transverse magnetic mode TM.

The branch **2b** related to transverse electric mode TE comprises a duplicator DD-PX-TS **26** that divides the transverse electric mode TE of the optical signal OS into two replicas, and introduces polarization crossing PX and a time-shift TS between the two replicas. The transverse electric mode TE is divided into two replicas, each one comprising a so-called vertical polarization component Vte and a so-called horizontal polarization component Hte which are respectively collected at the outputs **27a** and **27b** of the duplicator DD-PX-TS **26.** The two replicas of the transverse electric mode TE of the optical signal OS are then mixed with the pulse signal from the laser source SPS 3, in accordance with the previously described heterodyning process. Next, once mixed, the two replicas are introduced into the inputs **28a** and **28b** respectively of the device BD-ADC **16** for sampling and detecting the optical signal OS in view of being displayed after electronic processing, for example in the form of a constellation diagram or an eye diagram in the event that the initial OS signal is only polarized in transverse electric mode TE.

The scheme of the linear optical sampling visualization system, as depicted by Figure 1, is therefore simpler and less expensive to manufacture than existing systems.

In the event that the polarization of the initial OS signal is unknown and may be either, the visualization of the constellation diagram or eye diagram shall be carried out after the combined processing of the signal derived from branch 2a with respect to transverse magnetic mode TM, and of the signal derived from branch 2b with respect to transverse electric mode TE.

The horizontal polarization components Htm and Hte, which respectively correspond to the transverse magnetic propagation mode TM and transverse electric propagation mode TE of the optical signal OS, are vectors homogenous to an optical field. They are parallel to the horizontal polarization component Hsp of the pulse signal, along a waveguide carrying the polarization components of the pulse signal SP and optical signal OS to the device for sampling and detecting the optical signal OS. They are obtained by breaking down the optical field of the optical signal OS to be analyzed based on known eigenvectors. The eigenvectors are orthogonal to one another, as is the projection of the signal OS on the eigenvectors. Next, the horizontal polarization components Htm and Hte are separated in time, then made parallel in the direction of the horizontal polarization component Hsp.

Consequently, the modulus of the vector of the horizontal polarization component Htm related to the transverse magnetic propagation mode TM is equal to the modulus of the vector of the vertical polarization component Vtm. The modulus of the vector of the horizontal polarization component Hte related to the transverse electric propagation mode TE is equal to the modulus of the vector of the vertical polarization component Vte. An appropriate combination of the horizontal polarization components Htm and Hte makes it possible to find the initial vector of the optical signal OS, as well as an appropriate combination of the vertical polarization components Vtm and Vte makes it possible to find the initial vector of the optical signal OS.

It should be noted that in the present situation, a horizontal polarization component Htm bit is shifted by a half-period in relation to a vertical polarization component Vtm bit. Likewise, a horizontal polarization component Hte bit is shifted by a half-period relative to a vertical polarization component Vte bit. While the vertical polarization component Vsp is shifted by a half-period plus one bit-time compared to the horizontal polarization component Hsp.

However, according to another embodiment, the vertical polarization component Vsp may be shifted by a half-period relative to the horizontal polarization component Hsp, while a horizontal polarization component Htm bit may be shifted by a half-period plus one bit-time relative to a vertical polarization component Vtm bit. Likewise, a horizontal polarization component Hte bit may then be shifted by a half-period relative to a vertical polarization component Vte bit.

Since the polarization state of the optical signal OS to be visualized is unknown, it is projected onto two orthogonal arbitrary propagation modes E1 and E2 that respectively correspond, in the illustration given here, to the transverse magnetic mode TM and the transverse electric mode TE of the optical signal OS. It should also be noted that the path within the branch **2a** of the subsystem **2** taken by one of the propagation modes E1 of the optical signal OS to be viewed, here the transverse magnetic mode TM, is similar in nature and length to the path taken by the other propagation mode E2, here the transverse electric mode TE, in the branch 2b of the subsystem **2.** Likewise, the paths **7** and **8** of the subsystem **1** taken by the pulse signal SP from the source SPS **3** are similar to one another in nature and length. Finally, it should be noted that the propagation modes E1 are parallel to one another in the replicas that arrive at the inputs **12a, 25a** and **12b, 25b** of the device BD-ADC **13.** Likewise, the propagation modes E2 are also parallel to one another in the replicas that arrive at the inputs **15a, 28a** and **15b, 28b** of the device BD-ADC **16.**

Thus, due to the unknown nature of the propagation mode of the optical signal OS to be visualized, it is necessary to identically reproduce the visualization scheme of a signal whose propagation mode is perfectly known (for example, rectilinear). The simultaneous detection of the vertical polarization components Vsp, Vtm and Vte and horizontal polarization components Hsp, Htm and Hte make it possible to sample a complex signal OS. Electronic processing then makes it possible to visualize complex signal OS. It is therefore important that the vertical polarization components Vsp, Vtm and Vte and horizontal polarization components Hsp, Htm and Hte are well-defined in a plane perpendicular to the optical axis located right before those polarization components are detected by each of the balanced photodetectors.

The following description may follow from the simplified diagram of Figure 2, which is the visualization scheme of an optical signal OS for a single propagation mode E1, here the transverse magnetic mode TM whose path begins at the output port **105a** of Figure 2.

### Part of the sampling visualization system related to the transverse magnetic mode of the optical signal

We shall examine Figure 2, which is a simplified illustration of one part **101** of the sampling visualization system **100** of Figure 1, wherein only the path taken by one of the propagation modes, here the transverse magnetic mode TM, of the vectorial optical signal OS, entering the sampling visualization system **100,** had been depicted.

A phase- and/or amplitude-encoded optical signal OS containing the transmitted data, whose propagation mode is projected onto a propagation mode specific to an eigen propagation mode in the algebraic sense of the term, e.g. an arbitrary but known linear direction, is transported within a standard optical fiber **102** known as a SMF (for "Single Mode Fiber"). The propagation mode of the incoming optical signal OS, with a binary bit-rate of 10 Gb/s for example, is indeterminate. The optical signal OS is injected at the input **103** of a polarization separator PBS **104** that breaks down the vectorial optical signal OS into two orthogonal propagation modes: A transverse magnetic mode TM with vertical polarization and a transverse electric mode TE with horizontal polarization for the situation of Figure 2 in which the connections are made using waveguides, particularly polarization-maintaining optical fibers PMF.

The transverse magnetic mode TM of the optical signal OS collected at the output **105a** of the separator PBS **104** is sent to the input port **106** of a duplicator DD-PX-TS **107** that divides the transverse magnetic mode TM into two replicas, performs a polarization crossing PX and introduces a time-shift TS between the two replicas of the optical signal OS. These two replicas are combined and then redivided to produce two replicas once again, each one comprising a vertical polarization component Vtm and a horizontal polarization component Htm that are respectively collected at the outputs **108a** and **108b** of the duplicator DD-PX-TS **107.**

The transverse electric mode TE of the optical signal OS takes a different path (not depicted) at the output **105b** of the separator PBS **104.**

The partial sampling visualization system **101** further comprises a laser source SPS **109** emitting brief pulses (on the order of 1ps). The source SPS **109** generates a sampling pulse signal SP within an optical fiber PMF **110.** The sampling pulses SP last, for example, τ one picosecond, making it possible to observe rapid events, separated by a null amplitude range with a repetition rate of 20 MHz. These sampling pulses SP are injected into a duplicator SPD-PX-TS **111.**

The duplicator SPD-PX-TS **111** provides the sampling pulse signal SP into two replicas, crosses their polarization PX and introduces a time-shift TS between the two replicas equal to a precise duration corresponding to the sum (Tp/2 + Td) of half the period Tp of the sampling pulse signal SP and bit-time Td of the vectorial optical signal OS. For example, it is possible to have a sampling period Tp equal to 50 nanoseconds (i.e. 20 MHz) and a bit-time Td of the vectorial optical signal OS equal to 100 picoseconds (i.e. 10 Gb/s), the purpose of the division of the signal being to solve the problem of low coherence among the pulse laser sources SPS or the low coherence of the optical signals OS to be analyzed. Next, those two replicas are recombined. A single polarization-maintaining optical fiber PMF **112** ensures the transportation of the recombined pulse signal SP, comprising a vertical component Vsp and a horizontal component Hsp, from the output of the duplicator SPD-PX-TS **111** to the input **113** of the splitter PM-TSM-S **114.**

The splitter PM-TSM-S **114** divide the incoming signal into two replicas with the polarization and time-shift previously introduced being maintained. The sampling pulse trains SP passing through the splitter PM-TSM-S **114** enable an accurate readjustment of the time-shift TS between the two replicas. This readjustment is made necessary to enable the creation of the signals quadrature (π/2) between the two outputs **115a** and **115b** of the splitter PM-TSM-S **114** in order to simultaneously obtain the actual part and the imaginary part of the optical signal OS to be sampled. The two replicas are respectively received at the outputs **115a** and **115b** of the splitter PM-TSM-S **114.**

The two replicas of the pulse signal SP, each having the form of a single signal comprising a vertical component Vsp and a horizontal component Hsp, are then introduced at the inputs **116a** and **116b** respectively of a device BD-ADC **117.** Likewise, the two replicas derived from the transverse magnetic mode TM of the optical signal OS, each having the form of a single signal comprising a vertical component Vtm and a horizontal component Htm, are introduced at the inputs **118a** and **118b** respectively of the device BD-ADC **117.** The device BD-ADC **117** is intended to acquire and process the signal to be sampled and digitized. The two replicas of the pulse signal SP respectively derived from the two outputs **115a** and **115b** of the splitter PM-TSM-S **114** are phase-shifted by one quadrature (π/2). There is no time-shift between the signals arriving at the inputs **116a** and **118a** and at the inputs **116b** and **118b** of the device BD-ADC **117.**

The two replicas of the transverse magnetic mode TM of the optical signal OS are sampled by the linear sampling pulse train SP coming from the laser source **109.** Finally, at the output **119** of the partial sampling visualization system **101,** the sought-after information is collected in the form of a complex digital signal relating at least to the phase and amplitude of the optical signal OS to be analyzed, sampled, and numbered. The output **119** comes in the form of a numerical table of complex numbers. This table is obtained after a digital processing of the numerical data acquired by an analog/digital converter. This processing consists of first separating the samples into vertical Vtm and horizontal Htm polarization components, standardizing them, then subtracting those tables from one another element by element, to obtain information regarding the encoding of the sampled optical signal OS. This information is then retrieved and displayed, for example in the form of a constellation diagram, with a diagram refresh rate (greater than 1 Hz) that is compatible with the end-users' real-time analysis and measurement needs.

### Duplicator SPD-PX-TS

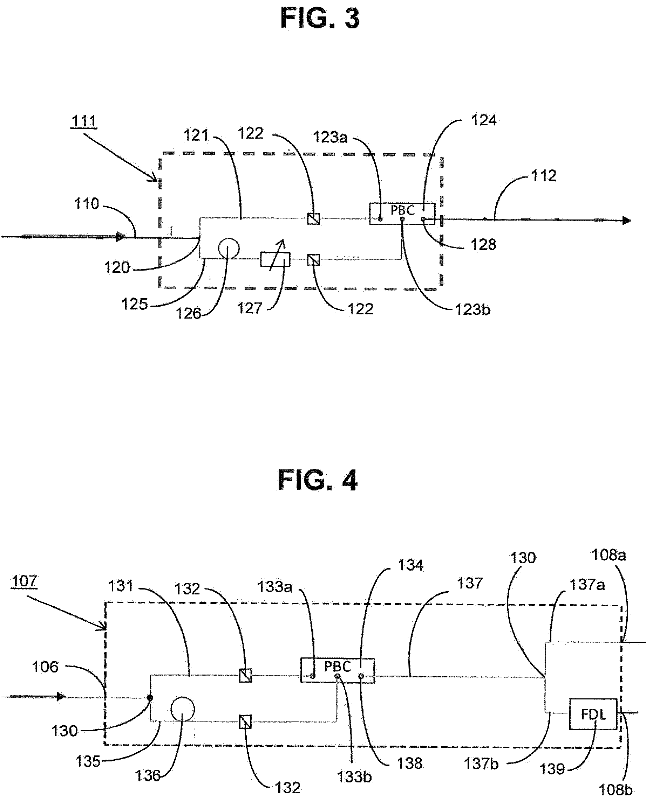

The duplicator SPD-PX-TS **111** of Figure 2 is depicted in greater detail in Figure 3, in order to explain how the sampling pulse train SP, derived from the laser source SPS **109,** is duplicated with a polarization crossing PX and a time-shift TS.

The sampling pulse signal SP, having a vertical polarization propagation mode and carried by the optical fiber PMF **110,** is sent into the duplicator SPD-PX-TS **111.** The sampling pulse signal SP split into two replicas by a polarization-maintaining coupler PMC **120.**

A first arm **121** located after the coupler PMC **120** is connected via a connector **122** to the first input port **123a** of a polarization beam combiner PBC **124.** The combiner PBC **124** may, for example, be a commercially available device.

A second arm **125** located after the coupler PMC **120** is also connected via a connector **122** to the second input port **123b** of the combiner PBC **124.** The second arm **125** comprises two time-delay lines. A first fixed time-delay line **126** introduces a time-shift that is equal to half the period Tp of the sampling pulse signal SP, as that time-shift Tp/2 may be fixed permanently because it depends on the source SPS **109** that is used. A second time-delay line **127** is a so-called tunable delay line TDL that introduces a time-shift equal to one bit-time Td of the vectorial optical signal OS that depends on the bit-rate of the vectorial optical signal OS to be sampled. For example, the bit-time Td is equal to 100 ps for a bit-rate of 10 Gb/s. Thus, the total time-shift between the first **121** and second **125** arm of the combiner PBC **124** is equal to (Tp/2 + Td). The replica of the pulse signal SP circulating within the arm **125,** initially having vertical polarization Vsp, is turned 90° to produce a signal having a horizontal polarization propagation mode Hsp, this rotation being applied right before or right after the entry **123b** of the signal into the combiner PBC **124.**

The replica of the pulse signal SP arriving through the arm **121,** having a vertical polarization component Vsp, enters through the input port **123a** within the combiner PBC **124,** while the replica of the pulse signal SP arriving through the arm **125,** having a horizontal polarization component Hsp, enters through the input port **123b** into the combiner PBC **124.**

The replicas of the pulse signal SPS that are carried by the first **121** and second **125** arms are combined into a single signal traveling within a single fiber PMF **112** at the output **128** of the combiner PBC **124,** but the outgoing signal has the form of a single signal comprising a vertical component Vsp and a horizontal components Hsp. A combiner PBC is an off-the-shelf component whose function is to combine two optical signals coming from two fibers so that the combined signal can be carried by a single fiber. In the opposite direction, a separator PBS separates an optical signal being carried by an optical fiber into two signals having orthogonal propagation modes that are respectively carried within two fibers.

At the output port **128** of the combiner PBC **124,** a sampling pulse train SP is obtained that has two cross-polarization components PX and a precise, fine-tuned time-shift TS equal to (Tp/2 + Td). The fact that the outgoing sampling pulse signal SP, comprising a vertical polarization component Vsp and a horizontal polarization component Hsp, are derived from the combination performed by the combiner PBC **124** is an important function of the sampling visualization system, as a single optical fiber **112,** connected to the output **128** of the duplicator SPD-PX-TS **111,** ensures the carrying of that pulsed, duplicated, and finely time-shifted signal SP to the splitter PM-TSM-S **114.**

The embodiment depicted here comprises connectors **122.** These connectors **122** serve to join together two portions of fiber PMF, but naturally any other means of joining may be used, such as a weld.

### Duplicator DD-PX-TS

Figure 4 depicts in detail the duplicator DD-PX-TS **107** enabling the division of the data-containing optical signal OS with the introduction of polarization crossing PX and a time-shift TS. The transverse magnetic mode TM of the optical signal OS, when leaving the separator PBS **104** carried by the optical fiber PMF, enters the duplicator DD-PX-TS **107** through the input port **106.** The division of the TM mode of the optical signal OS into two replicas is achieved by means of a polarization-maintaining coupler PMC **130.**

A first arm **131** located after the coupler PMC **130** is connected by means of a connector **132** to the first input port **133a** of a combiner PBC **134** in order to feed into it one of the replicas, which has a vertical polarization propagation mode Vtm, of the transverse magnetic mode TM of the optical signal OS to the sample. The embodiment depicted here comprises connectors **132.** These connectors **132** serve to join together two portions of fiber PMF, but naturally any other means of joining may be used, such as a weld.

A second arm **135** located after the coupler PMC **130** is connected via a connector **132** to the second input port **133b** of the combiner PBC **134** in order to feed into it the other replica of the transverse magnetic mode TM of the optical signal OS. The polarization of the replica of the optical signal OS circulating within the arm **135,** initially vertical, is turned 90° to produce a signal having a horizontal polarization propagation mode Htm, this rotation being applied right before or right after the entry **133b** of the signal into the combiner PBC **134.** The second arm **135** also comprises a time-delay line **136** that imposes on the replica of the transverse magnetic mode TM of the optical signal OS traveling on it, a fixed time-shift TS (Tp/2) that is equal to half the period Tp of the pulse sampling signal SP and depends on the source SPS **109** used. Alternatively a tunable time-delay line, called TDL, may be added to the second arm **135** of the duplicator DD-PX-TS **107,** provided that the tunable time-delay line **127** of the second arm **125** of the duplicator SPD-PX-TS **111** is eliminated.

The signals carried by the first **131** and second **135** arms are combined into a single fiber PMF **137** at the output **138** of the combiner PBC **134** but comprising two orthogonal polarization components and a fixed time-shift TS of Tp/2 between the two vertical Vtm and horizontal Htm polarization components. A coupler **130** makes it possible to divide that signal into two optical signals OS that are then distributed among two fibers PMF **137a** and **137b,** derived from the fiber **137,** respectively leading the outputs **108a** and **108b** of the duplicator DD-PX-TS **107.** The fibers PMF **137a** and **137b** respectively lead to the inputs **118a** and **118b** of the device BD-ADC **117.** Balanced detection requires that the two data-containing optical signals OS arrive at the device BD-ADC **117** at the same time from the optical fibers PMF **137a** and **137b.** The signal carried by one of the arms **137b** also has a fixed time-shift compared to the signal carried by the other arm **137a** introduced by a fixed optical time-delay line **139,** called FDL (for "Fixed Delay Line"). This shift is permanently fixed, and it is adjusted in order to equalize the optical signal travel time between the output **138** and input **118a** with the one between the output **138** and input **118b** within the device BD-ADC **117.**

### Splitter PM-TSM-S

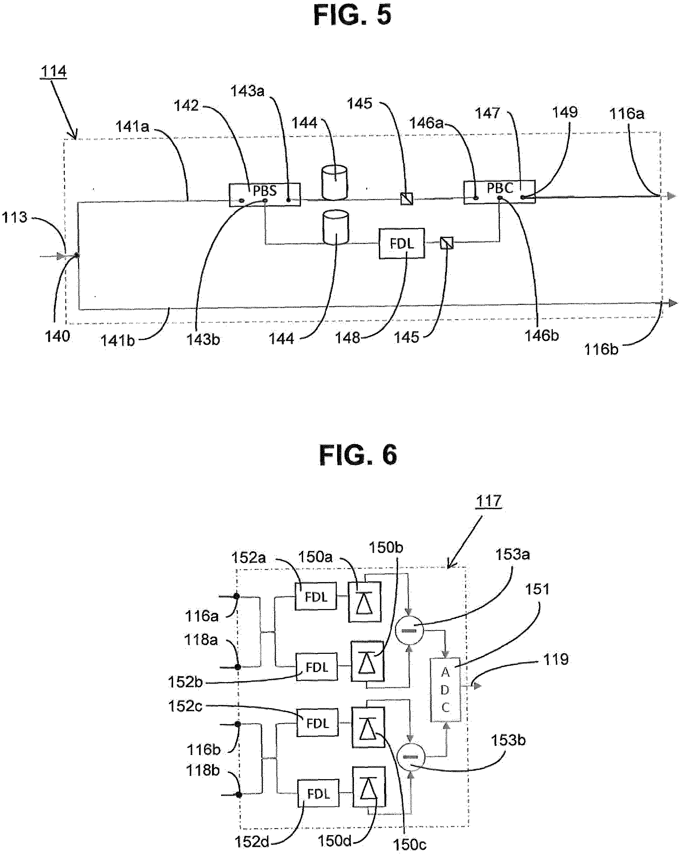

Figure 5 depicts in detail the splitter PM-TSM-S **114** for adjusting the time-shift of the pulse signal SP before it enters the device BD-ADC **117,** in order to explain how a fine-tuned adjustment of the time-shift is achieved. This adjustment is made necessary in order to make it possible to produce the quadrature between the two outputs of the device **114** so as to simultaneously obtain the real part and imaginary part of the signal to be sampled. The signals carried by the optical fibers PMF within the sampling visualization system may experience temperature-related and/or mechanical disruptions that could cause random fluctuations in the arrival time of the sampling pulses SP at the inputs **116a** and **116b** of the detection device BD-ADC **117,** which makes it necessary to readjust the time-shift. This accurate readjustment of the time-shift must be done independently for the two vertical Vsp and horizontal Hsp polarization components within the fibers PMF **141a** and **141b** since the optical paths are different for the two vertical Vsp and horizontal Hsp polarization components, and because the two vertical Vsp and horizontal Hsp polarization components may behave differently based on the disruptions encountered.

Upon entering the splitter PM-TSM-S **114,** the pulse signal SP, coming from the output port **128** of the duplicator SPD-PX-TS **111** and carried by an optical fiber PMF **112,** is divided by a coupler PMC **140** into two replicas distributed between two arms **141a** and **141b.** A replica of the pulse signal SP, comprising two orthogonal Vsp and horizontal Hsp polarization components, propagates into the arm **141a.** Another replica of the pulse signal SP, also comprising the two polarization components, respectively vertical Vsp and horizontal Hsp, propagate into the second arm **141b,** and is sent directly to the input **116b** of the device BD-ADC 117. The first arm **141a** is used to accurately adjust the time-shift between the two replicas.

The first arm **141a** comprises a polarization separator PBS **142** which separates the two polarization components, vertical Vsp and horizontal Hsp, of the pulse signal SP, the vertical polarization component Vsp being collected at the output **143a** of the separator PBS **142,** while the horizontal polarization component Hsp is collected at the output **143b.** The vertical polarization component Vsp passes through a cylinder PZT **144** made of piezoelectric material, around which is would an optical fiber PMF, so that this change in the diameter of the cylinder PZT **144** leads to a fine adjustment of the length of the optical fiber PMF, thereby providing a fine adjustment of the optical path. The electric voltage that must be applied to the cylinder PZT **144** shall be calculated by integrated circuits FPGA (for "Field Programmable Gate Array") that use as input signals the output signals of the device BD-ADC **117,** such that low-frequency fluctuations in different optical paths can be corrected in real time. The piezoelectric cylinder PZT **144** must make it possible to accurately readjust the time-shift in order to make it possible to create the quadrature between the two outputs **115a** and **115b** of the splitter PM-TSM-S **114** in order to simultaneously obtain the real part and the imaginary part of the optical signal OS to be sampled. Finally, the optical signal OS passes through a connector **145** before reaching the input **146a** of a combiner PBC **147.** The embodiment depicted here comprises connectors **145.** These connectors **145** serve to join together two portions of fiber PMF, but naturally any other means of joining may be used, such as a weld, for example.

On its own end, the horizontal polarization component Hsp is sent to the input port **146b** of the combiner PBC **147,** after having traversed a cylinder PZT **144** whose function had previously been described, a fixed time-delay line FDL **148** introducing a time-shift making it possible to offset the time-shift of the vertical polarization component Vsp, and a connector **145.** The presence of a fixed time-delay line FDL **148** is not essential in this case, but may turn out to be practical in the actual implementation of the apparatus. The sampling pulse signal SP collected at the output **149** of the combiner PBC **147,** having the form of a single signal comprising a vertical polarization component Vsp and a horizontal polarization component Hsp, is sent to the input **116a** of the device BD-ADC **117.**

The splitter PM-TSM-S **114** for adjusting the time-shift of the pulse signal SP, depicted in Figure 5, makes it possible to very finely adjust the optical phase (and therefore the time-shift) of the sampling pulses arriving at the coupled photodiodes, for both the vertical Vsp and Hsp horizontal polarization components.

The two pulse signals SP exiting the splitter PM-TSM-S **114** and entering the device BD-ADC **117** through the inputs **116a** and **116b** respectively, must have a constant phase difference of exactly π/2 which is obtained using the piezoelectric devices PZT **144**

### Device BD-ADC

Figure 6 depicts in detail a device BD-ADC **117** for sampling and detecting the optical signal OS in order to retrieve information about amplitude and phase, in the form of a constellation diagram, for example. The sampling and detection of the optical signal OS are obtained using balanced detectors BD **150a**-**150d** (for "Balanced Detector") and an analog-to-digital converter ADC **151** (pour "Analog to Digital Converter") at two inputs. It may be provided that the device BD-ADC **117** further comprises comparators for comparing the electrical signals emitted by the balanced photodetectors.

In the device BD-ADC **117** for the sampling and detection of the optical signal OS, fixed time-delay lines FDL **152a-152d** are used which introduce a time shift that offsets the constant difference in optical path between the signals arriving at the balanced photodetectors BD **150a**-**150d**. However the fixed time-delay lines FDL **152a**-**152d** may be placed after the photodetectors BD **150a**-**150d**, and if so, they are electric time-delay lines. The electrical signals emitted by a pair of twinned photodetectors **150a, 150b** or **150c, 150d** are sent to a differential amplifier **153a** or **153b** respectively, then those electrical signals enter into the analog-digital converter ADC **151.** The electrical signals are non-zero only when the optical signal OS and the pulse signal SP are simultaneously present in the balanced photodetectors BD **150a**-**150d**. The sampling feature is thereby carried out by two pairs of photodetectors **150a, 150b** and **150c, 150d.**

### Full system

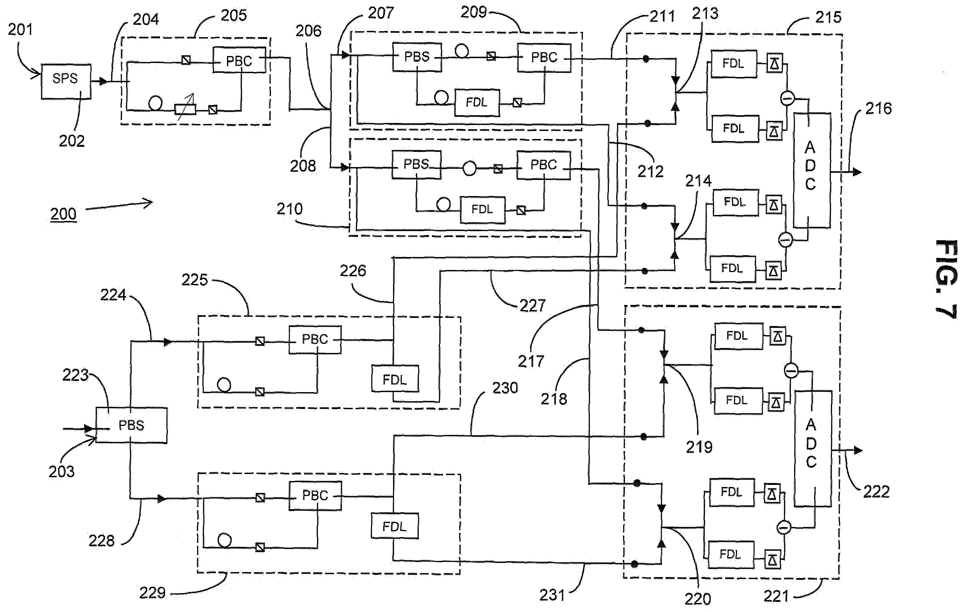

The full system that makes it possible to visualize complex optical signals at very high speeds through ultra-fast linear optical sampling is depicted in summary and in greater detail in Figure 7.

The visualization system **200** comprises a subsystem **201** related to the signal SP containing sampling pulses from a laser source SPS **202** and another subsystem **203** related to the optical signal OS to be analyzed.

The sampling pulse signal SP emitted by the laser source SPS **202** is carried by PMF **204** to a duplicator SPD-PX-TS **205,** which is analogous to the duplicator SPD-PX-TS **111** depicted in Figure 2, followed by a coupler **206** that divides the sampling pulse signal SP into two replicas. A first replica of the pulse signal SP, coming from the coupler **206,** is carried by an optical fiber PMF **207** to a device PM-TSM-S **209,** analogous to the device PM-TSM-S **114** depicted in Figure 2. This first replica is then divided into two new replicas. The two new replicas coming from the device PM-TSM-S **209** are carried by optical fibers PMF **211** and **212** to couplers **213** and **214** respectively to the device BD-ADC **215,** analogous to the device BD-ADC **117** depicted in Figure 2. At the output **216** of the device BD-ADC **215,** the information sought out is collected in the form of a complex digital signal relating to the amplitude and phase of the optical signal OS to be analyzed.

A second replica of the pulse signal SP, coming from the coupler **206,** is carried by an optical fiber PMF **208** to a device PM-TSM-S **210,** analogous to the device PM-TSM-S **209.** The two new replicas coming from the device PM-TSM-S **210** are then carried by optical fibers PMF **217** and **218** to couplers **219** and **220** respectively to the device BD-ADC **221,** analogous to the device BD-ADC **215** depicted in Figure 2. At the output **222** of the device BD-ADC **221,** the information sought out is collected in the form of a complex digital signal relating to the amplitude and phase of the optical signal OS to be analyzed.

On its own end, the optical signal OS to be analyzed arriving into the visualization system **200** enters a separator PBS **223** that separates the optical signal into two arbitrary, orthogonal propagation modes E1 and E2 that correspond here to a transverse magnetic propagation mode TM and a transverse electric propagation mode TE.

The transverse magnetic propagation mode TM, carried by an optical fiber PMF **224,** is introduced into a duplicator DD-PX-TS **225,** analogous to the duplicator DD-PX-TS **107** depicted in Figure 2. The duplicator DD-PX-TS **225** divides the signal into two replicas, crosses the polarization, and introduces a time shift between the two replicas, which are then combined and then divided again. A first replica is sent into the fiber PMF **226** to the input of the device BD-ADC **215** and the coupler **213,** while a fixed time shift is imposed on the second replica sent to the fiber PMF **227** in the direction of the input of the device BD-ADC **215** and the coupler **214.**

The transverse electric propagation mode TE of the signal OS collected at the output of the separator PBS **223** is carried by an optical fiber PMF **228** to a duplicator DD-PX-TS **229,** analogous to the duplicator DD-PX-TS **225.** The duplicator DD-PX-TS **229** divides the signal into two replicas, crosses the polarization, and introduces a time shift between the two replicas, which are then combined and then divided again. A first replica is sent into the fiber PMF **230** to the input of the device BD-ADC **221** and the coupler **219,** while a fixed time shift is imposed on the second replica sent to the fiber PMF **231** in the direction of the input of the device BD-ADC **221** and the coupler **220.**

Finally, at the output **216** of the device BD-ADC **215** and at the output **222** of the device BD-ADC **221** of the sampling visualization system **200,** sought-after information is respectively collected in the form of a complex digital signal related to the amplitude and phase of the sampled and digitized optical signal OS. This information is then retrieved and displayed, for example in the form of a constellation diagram.

It should be noted that the linear optical sampling visualization system may be implemented when the optical medium is formed of an optical fiber link as just described, but it may also be implemented in other optical propagation media, particularly when optical propagation takes place in open space.

## Claims

1. A system for visualizing an optical signal OS through ultra-fast linear optical sampling, comprising at least one first subsystem relating to the processing of a pulse sampling signal SP comprising a vertical polarization component Vsp and a horizontal polarization component Hsp and at least one second subsystem related to the processing of an optical signal OS to be sampled comprising a vertical polarization component Vtm, Vte and a horizontal polarization component Htm, Hte, the first and second subsystems adapted to cooperate with at least a device for sampling and detecting the optical signal, wherein the first subsystem (1) comprises:
- a source SPS (3) for generating a pulse optical signal SP,
- at least one duplicator SPD-PX-TS (5) adapted to divide the pulse signal SP into two replicas, to introduces polarization crossing and a time-shift, equal to the sum (Tp/2 + Td) of half the period Tp of the pulse signal SP and bit-time Td of the optical signal OS, between the replicas, and to combined those two replicas into a single outgoing pulse signal SP,
- at least one splitter PM-TSM-S (9, 10) adapted to divide the pulse signal SP leaving the duplicator SPD-PX-TS (205) into two replicas, phase-shifted by one quadrature (π/2), for the vertical Vsp and horizontal Hsp polarization components of the pulse signal SP independently,
- at least one device BD-ADC (13, 16) for sampling and detecting the optical signal, adapted to receive these two replicas, wherein the second subsystem (3) comprises:
- a separator PBS (21), adapted to received an optical signal OS to be viewed and to separate the incoming optical signal OS into two linear, orthogonal propagation modes E1 and E2,
- at least one duplicator DD-PX-TS (23, 26) adapted to divide the optical signal OS output by the separator into two replicas, to introduces polarization crossing and a time-shift, equal to half the period Tp of the pulse signal SP, between the replicas, to combine those two replicas into a single outgoing pulse signal and to redivide this single signal into two replicas, the at least one device BD-ADC (13, 16) being further adapted to receive these two replicas.

2. A system according to claim 1, wherein the splitter PM-TSM-S (9, 10) comprises at least one cylinder of piezoelectric material (144) around which is wound a polarization-maintaining optical fiber whose length varies based on the voltage applied to the cylinder.

3. A system according to one of claims 1 and 2, wherein the device (117) for sampling and detecting the optical signal OS comprises
- balanced photodetectors (150a-150d),
- fixed time-delay lines FDL (152a-152d),
- a two-input analog-to-digital converter (151).

4. A system according to one of the preceding claims, wherein the connections are made by means of polarization-maintaining optical fibers.

5. A system according to one of the preceding claims, further comprising polarization-maintaining couplers.

6. A method for visualizing a complex optical signal OS through linear optical sampling, implemented by means of the system according to any one of the preceding claims, comprising
- a pulse signal SP is emitted,
- the pulse signal SP is divided into two replicas by introducing polarization crossing and a time-shift, equal to the sum (Tp/2 + Td) of half the period Tp of the pulse signal SP and the bit-time Td of the optical signal OS, between the two replicas,
- the two replicas are combined into a single resulting signal comprising a vertical polarization component Vsp and a horizontal polarization component Hsp orthogonal to one another,
- the resulting pulse signal SP is divided into two replicas, phase -shifted by one quadrature (π/2),
- the two replicas of the pulse signal SP are introduced into a device for sampling and detecting the optical signal OS, and further comprising
- the optical signal OS is separated into two propagation modes E1 and E2 that are orthogonal to one another,
- a propagation mode E1, E2 is divided into two replicas by introducing polarization crossing and a time-shift between the replicas equal to half the period Tp of the pulse signal SP,
- the two replicas are combined into a single resulting signal comprising a vertical polarization component Vtm, Vte and a horizontal polarization component Htm, Hte orthogonal to one another and time-shifted,
- the resulting pulse signal OS is divided into two replicas,
- the two replicas of the pulse signal OS are introduced into the device for sampling and detecting the optical signal OS.

7. A method according to claim 6, wherein an accurate adjustment of the time-shift between the two replicas, for the vertical Vsp and horizontal Hsp polarization components of the pulse signal SP is independently achieved by varying the lengths of the polarization-maintained optical fiber, wound around a cylinder of piezoelectric material (144), under the effect of the voltage applied to the cylinder,

8. A method according to one of the claims 6 and 7, wherein the vertical polarization component Vsp of the pulse signal SP is parallel to the vertical polarization component Vtm, Vte of the optical signal OS, and the horizontal polarization component Hsp of the pulse signal SP is parallel to the horizontal polarization component Htm, Hte of the optical signal OS, making it possible to generate interferences.

## Patentansprüche

1. System für das Visualisieren eines optischen Signals (OS) durch ultraschnelles, lineares optisches Abtasten, mindestens ein erstes Subsystem im Zusammenhang mit dem Verarbeiten eines Impulsabtastsignals (SP) umfassend, wobei das erste Subsystem eine vertikale Polarisierungskomponente (Vsp) und eine horizontale Polarisierungskomponente (Hsp) umfasst, sowie ein zweites Subsystem im Zusammenhang mit dem Verarbeiten eines abzutastenden optischen Signals (OS) umfassend, eine vertikale Polarisierungskomponente (Vtm), Vte) und eine horizontale Polarisierungskomponente (Htm, Hte) umfassend, wobei das erste und das zweite Subsystem dafür ausgelegt sind, um mit mindestens einem Gerät für das Abtasten und Feststellen des optischen Signals zu kooperieren, wobei das erste Subsystem (1) umfasst:
- eine Quelle eines Signalimpulsstroms (Signal Pulse Steam, SPS) (3) zum Generieren eines optischen Impulssignals (SP),
- Mindestens einen SPD-PX-TS-Duplikator (5), der dafür ausgelegt ist, um das Impulssignal (SP) in zwei Repliken aufzuspalten, die Kreuzpolarisation und eine Zeitverschiebung gleich der Summe Po (Tp/2 + Td) des halben Zeitraums Tp des Impulssignals (SP) und der Bit-Zeit Td des optischen Signals (OS) zwischen den Repliken einzuleiten sowie besagte zwei Repliken in einem einzigen ausgehenden Impulssignal (SP) zu kombinieren,
- mindestens einen PM-TSM-S-Splitter (9, 10), ausgelegt für das aufteilen des den SPD-PX-TS-Duplikatar (205) verlassenden Impulssignals (SP) in zwei Repliken, die phasenverschoben sind um eine Quadratur (π/2), unabhängig voneinander für die die Komponenten der vertikalen Polarisierung (Vsp) und der horizontalen Polarisierung (Hsp) des Impulssignals (SP),
- mindestens eine BD-ADC-Vorrichtung (13, 16) für das Abtasten und Feststellen des optischen Signals, ausgelegt für den Empfang besagter zwei Repliken, wobei das zweite Subsystem (3) umfasst:
- ein PBS-Zwischenstück (21), ausgelegt für den Empfang eines zu prüfenden optischen Signals (OS) und für das Teilen des eingehenden optischen Signals (OS) in zwei lineare, orthogonale Ausbreitungsmodi E1 und E2,
- mindestens einen DD-PX-TS-Duplikator (23, 26), ausgelegt für das aufspalten des vom Zwischenstück ausgegebenen optischen Signals (OS) in zwei Repliken und für das Einleiten der Kreuzpolarisation und einer Zeitverschiebung zwischen den Repliken gleich dem halben Zeitraum Tp des Impulssignals, für das Kombinieren besagter zwei Repliken in einem einzigen ausgegebenen Impulssignal und für das neuerliche Trennen dieses einzigen Signals in zwei Repliken, wobei die mindestens eine BD-ADC-Vorrichtung (13, 16) weiterhin dafür ausgelegt ist, um die besagten zwei Repliken zu empfangen.

2. System nach Anspruch 1, wobei der PM-TSM-S-Splitter (9, 10) mindestens einen Zylinder aus piezoelektrischem Material (144) umfasst, um den eine polarisationserhaltende optische Faser gewickelt ist, deren Länge von der an den Zylinder angelegten Voltzahl abhängt.

3. System nach einem der Ansprüche 1 und 2, wobei die Vorrichtung (117) für das Abtasten und Feststellen des optischen Signals (OS) Folgendes umfasst:
- abgeglichene Fotodetektoren (150a-150d),
- Leitungen mit festgelegter Zeitverzögerung (Fixed Time Delay Lines, FDL, 152a-152d),
- Analog-/Digital-Wandler (151) mit zwei Eingängen.

4. System nach einem der vorgenannten Ansprüche, wobei die Verbindungen über polarisationserhaltende optische Fasern hergestellt werden.

5. System nach einem jeglichen der vorgenannten Ansprüche, weiterhin polarisationserhaltende Koppler umfassend:

6. Verfahren für das Visualisieren eines optischen Signals (OS) durch lineares optisches Abtasten, implementiert anhand des Systems nach einem jeglichen der vorgenannten Ansprüche, Folgendes umfassend:
- ein Impulssignal (SP) wird gesendet,
- das Impulssignal (SP) wird in zwei Repliken aufgeteilt, indem die Kreuzpolarisation und eine Zeitverschiebung gleich der Summe Po (Tp/2 + Td) des halben Zeitraums Tp des Impulssignals (SP) und der Bit-Zeit Td des optischen Signals (OS) zwischen den Repliken eingeleitet wird,
- besagte zwei Repliken werden in einem einzigen Signal kombiniert, das eine vertikale Polarisierungskomponente (Vsp) und eine horizontale Polarisierungskomponente (Hsp) umfasst, die orthogonal zueinander sind,
- das daraus hervorgegangene Impulssignal (SP) wird in zwei Repliken aufgeteilt, die phasenverschoben sind um eine Quadratur (Π/2),
- die beiden Repliken des Impulssignals (SP) werden in eine Vorrichtung für das Abtasten und Feststellen des optischen Signals (OS) gegeben,
und weiterhin umfassend:
- das optische Signal (OS) wird aufgeteilt in zwei Ausbreitungsmodi E1 und E2, die orthogonal zueinander sind,
- ein Ausbreitungsmodus (E1, E2) wird durch das Einleiten der Kreuzpolarisation und einer Zeitverschiebung zwischen den Repliken gleich dem halben Zeitraum Tp des lmpulssignals (SP) in zwei Repliken aufgeteilt,
- besagte zwei Repliken werden in einem einzigen Signal kombiniert, das eine vertikale Polarisierungskomponente (Vtm, Vte) und eine horizontale Polarisierungskomponente (Htm, Hte) umfasst, die orthogonal und zeitverschoben zueinander sind,
- das resultierende Impulssignal (SP) wird in zwei Repliken aufgeteilt,
- die beiden Repliken des Impulssignals (SP) werden in eine Vorrichtung für das Abtasten und Feststellen des optischen Signals (OS) gegeben.

7. Verfahren nach Anspruch 6, wobei ein eine korrekte Anpassung der Zeitverschiebung zwischen den beiden Repliken für die vertikalen (Vsp) und horizontalen (Hsp) Polarisierungskomponenten des Impulssignals (SP) unabhängig voneinander erreicht werden, indem die Längen der polarisationserhaltenden optischen Faser, die um einen Zylinder aus piezoelektrischem Material (144) gewickelt ist, gemäß der an den Zylinder angelegten Voltzahl variiert werden.

8. Verfahren nach einem der Ansprüche 6 und 7, wobei die vertikale Polarisierungskomponente (Vsp) des Impulssignals (SP) parallel zur vertikalen Polarisierungskomponente (Vtm, Vte) des optischen Signals (OS) und die horizontale Polarisierungskomponente (Hsp) des Impulssignals (SP) parallel zur horizontalen Pfllarisierungskomponente (Htm, Hte) des optischen Signals (OS) ist und so das Erzeugen von Interferenzen ermöglicht wird.

## Revendications

1. Système pour visualiser un signal optique OS par échantillonnage optique linéaire ultra rapide, comprenant au moins un premier sous-système relatif au traitement d'un signal d'échantillonnage d'impulsion SP comprenant une composante de polarisation verticale Vsp et une composante de polarisation horizontale Hsp et au moins un deuxième sous-système relatif au traitement d'un signal optique OS à échantillonner comprenant une composante de polarisation verticale Vtm, Vte et une composante de polarisation horizontale Htm, Hte, le premier et le deuxième sous-systèmes étant adaptés pour coopérer avec au moins un dispositif pour échantillonner et détecter le signal optique, dans lequel le premier sous-système (1) comprend :
- une source SPS (3) pour générer un signal optique impulsionnel SP,
- au moins un duplicateur SPD-PX-TS (5) adapté pour diviser le signal impulsionnel SP en deux répliques, pour introduire un croisement de polarisation et un décalage de temps, égal à la somme (Tp/2 + Td) de la moitié de la période Tp du signal d'impulsion SP et du temps bit Td du signal optique OS, entre les répliques, et pour combiner ces deux répliques en un signal d'impulsion SP sortant unique,
- au moins un diviseur PM-TSM-S (9, 10) adapté pour diviser le signal d'impulsion SP quittant le duplicateur SPD-PX-TS (205) en deux répliques, déphasées par une quadrature (π/2), pour les composantes de polarisation verticale Vsp et horizontale Hsp du signal d'impulsion SP indépendamment,
- au moins un dispositif BD-ADC (13, 16) pour échantillonner et détecter le signal optique, adapté pour recevoir ces deux répliques, dans lequel le deuxième sous-système (3) comprend :
- un séparateur PBS (21), adapté pour recevoir un signal optique OS à visualiser et pour séparer le signal optique OS entrant en deux modes de propagation linéaire et orthogonal E1 et E2,
- au moins un duplicateur DD-PX-TS (23, 26) adapté pour diviser le signal optique OS délivré en sortie par le séparateur en deux répliques, pour introduire un croisement de polarisation et un décalage de temps, égal à la moitié de la période Tp du signal d'impulsion SP, entre les répliques, pour combiner ces deux répliques en un signal d'impulsion sortant unique et pour re-diviser le signal unique en deux répliques, l'au moins un dispositif BD-ADC (13, 16) étant en outre adapté pour recevoir ces deux répliques.

2. Système selon la revendication 1, dans lequel le diviseur PM-TSM-S (9, 10) comprend au moins un cylindre de matériau piézoélectrique (144) autour duquel est enroulée une fibre optique à maintien de polarisation dont la longueur varie en fonction de la tension appliquée au cylindre.

3. Système selon l'une des revendications 1 et 2, dans lequel le dispositif (117) pour échantillonner et détecter le signal optique OS comprend
- des photodétecteurs équilibrés (150a à 150d),
- des lignes à retard fixe FDL (152a à 152d),
- un convertisseur analogique/numérique à deux entrées (151).

4. Système selon l'une des revendications précédentes, dans lequel les connexions sont réalisées au moyen de fibres optiques à maintien de polarisation.

5. Système selon l'une des revendications précédentes, comprenant en outre des coupleurs à maintien de polarisation.

6. Procédé pour visualiser un signal optique OS complexe par échantillonnage optique linéaire, mis en oeuvre au moyen du système selon l'une quelconque des revendications précédentes, comprenant les étapes suivantes
- un signal d'impulsion SP est émis,
- le signal d'impulsion SP est divisé en deux répliques en introduisant un croisement de polarisation et un décalage de temps, égal à la somme (Tp/2 + Td) de la moitié de la période Tp du signal d'impulsion SP et du temps bit Td du signal optique OS, entre les deux répliques,
- les deux répliques sont combinées en un signal résultant unique comprenant une composante de polarisation verticale Vsp et une composante de polarisation horizontale Hsp orthogonales l'une par rapport à l'autre,
- le signal d'impulsion SP résultant est divisé en deux répliques, déphasées par une quadrature (Π/2),
- les deux répliques du signal d'impulsion SP sont introduites dans un dispositif pour échantillonner et détecter le signal optique OS,
et comprenant en outre les étapes suivantes
- le signal optique OS est séparé en deux modes de propagation E1 et E2 qui sont orthogonaux l'un par rapport à l'autre,
- un mode de propagation E1, E2 est divisé en deux répliques en introduisant entre les répliques un croisement de polarisation et un décalage de temps égal à la moitié de la période Tp du signal d'impulsion SP,
- les deux répliques sont combinées en un signal résultant unique comprenant une composante de polarisation verticale Vtm, Vte et une composante de polarisation horizontale Htm, Hte orthogonales l'une par rapport à l'autre et décalées dans le temps,
- le signal d'impulsion OS résultant est divisé en deux répliques,
- les deux répliques du signal d'impulsion OS sont introduites dans le dispositif pour échantillonner et détecter le signal optique OS.

7. Procédé selon la revendication 6, dans lequel un réglage précis du décalage de temps entre les deux répliques, pour les composantes de polarisation verticale Vsp et horizontale Hsp du signal d'impulsion SP est obtenu indépendamment en faisant varier les longueurs de la fibre optique à maintien de polarisation, enroulée autour d'un cylindre de matériau piézoélectrique (144), sous l'effet de la tension appliquée au cylindre.

8. Procédé selon l'une des revendications 6 et 7, dans lequel la composante de polarisation verticale Vsp du signal d'impulsion SP est parallèle à la composante de polarisation verticale Vtm, Vte du signal optique OS, et la composante de polarisation horizontale Hsp du signal d'impulsion SP est parallèle à la composante de polarisation horizontale Htm, Hte du signal optique OS, permettant ainsi de générer des interférences.
